# EUROPÄISCHE PATENTSCHRIFT

(11) **EP 1 656 461 B1**
(45) Veröffentlichungstag und Bekanntmachung des Hinweises auf die Patenterteilung: **09.10.2013**
(21) Anmeldenummer: 04741380.2
(22) Anmeldetag: 06.08.2004
(51) Int. Cl.: C21B 5/02, C21B 5/04, C21B 7/04, C21B 7/06, C04B 35/46, C22B 7/00, C22B 34/12

(54) **VERWENDUNG VON TIO2-RÜCKSTÄNDEN AUS DEM SULFATVERFAHREN**
USE OF TIO2 RESIDUES FROM A SULFATE METHOD
UTILISATION DE RÉSIDUS DE TIO2 PROVENANT D'UN PROCÉDÉ AU SULFATE

(30) Priorität: 09.08.2003 DE 10336650
(43) Veröffentlichungstag der Anmeldung: 17.05.2006
(73) Patentinhaber: Sachtleben Chemie GmbH, 47198 Duisburg (DE)
(72) Erfinder: AMIRZADEH-ASL, Djamschid, 47445 Moers (DE)
(74) Vertreter: Nobbe, Matthias
(86) Internationale Anmeldenummer: PCT/EP2004/008837
(87) Internationale Veröffentlichungsnummer: WO 2005/014867

(56) Entgegenhaltungen:
- EP-A- 0 611 740
- EP-A- 0 714 868
- DE-A1- 19 705 996
- DE-A1- 19 725 021
- DE-C1- 4 419 816
- DE-C1- 19 830 102
- DATABASE WPI Section Ch, Week 200234 Derwent Publications Ltd., London, GB; Class M24, AN 2002-302433 XP002325043 -& RU 2 179 583 C1 (SEVERSTAL STOCK CO) 20. Februar 2002 (2002-02-20)

## Beschreibung

Die Erfindung betrifft die Verwendung von TiO₂-Rückständen aus dem Sulfatverfahren.

Die Verwendung von Rückständen aus der TiO₂-Produktion (TiO₂-Rückstände) in der metallurgischen Industrie ist prinzipiell bekannt. So wird in der DE 4419816 C1 ein titanhaltiger Zuschlagstoff, bestehend aus TiO₂-Rückständen und weiteren Stoffen, beschrieben. Die DE 19705996 C2 beschreibt ein Verfahren zur Herstellung eines TiO₂ enthaltenden Zuschlagstoffes. Dabei wird eine Mischung aus TiO₂-Rückständen und Eisen, bzw. Eisenverbindungen bei 200 bis 1300 °C thermisch behandelt. Von Nachteil ist die umständliche Dosierung und Mischung der TiO₂-Rückstände mit den jeweiligen weiteren Bestandteilen des Zuschlagstoffes.

Die DE 19830102 C1 beschreibt die Verwendung eines bei der TiO₂-Herstellung nach dem Chloridverfahren anfallenden feinkörnigen TiO₂-haltigen Reststoffes. Von Nachteil dieser Lehre ist, dass bei der TiO₂-Herstellung nach dem Sulfatverfahren solche feinkörnigen TiO₂-haltigen Reststoffe nicht anfallen und die Lehre deshalb auf TiO₂-Rückstände aus dem Sulfatverfahren nicht anwendbar ist.

EP 0 611 740 offenbart die Anwendung von TiO₂-Rückständen aus dem Sulfatverfahren in metallurgischen Prozessen. Diese TiO₂-Rückstände werden in den Ofen eingegeben zur Erhöhung der Haltbarkeit der feuerfesten Ausmauerung. Das Material wird vermischt mit Kohle oder Kohlenrückständen, und ggf. Eisenrückständen, pulverförmig oder als Formteil in den Ofen eingegeben. Der Anteil der Ti02-Rückstände ist bevorzugt zwischen 5 und 95 Gew.% des Gemisches.

Aufgabe der Erfindung ist es, die Nachteile des Standes der Technik zu überwinden und insbesondere eine einfache Verwendung von TiO₂-Rückständen aus der TiO₂-Produktion nach dem Sulfatverfahren aufzuzeigen.

Gelöst wird die Aufgabe durch die Verwendung von TiO₂-Rückständen aus dem Sulfatverfahren in metallurgischen Prozessen, wobei die TiO₂-Rückstände ohne weitere Mischung mit anderen Stoffen thermisch behandelt und eingesetzt werden, gemäß den Merkmalen der Patentansprüche.

Überraschend wurde gefunden, dass die TiO₂-Rückstände aus dem Sulfatverfahren für sich genommen in metallurgischen Prozessen die gleiche gewünschte Wirkung entfalten wie die bisher vorgesehenen Mischungen aus TiO₂-Rückständen und anderen Stoffen. Die TiO₂-Rückstände können in der thermischen Behandlung ungewaschen oder gewaschen und neutralisiert eingesetzt werden.

Die thermische Behandlung der TiO₂-Rückstände wird bevorzugt bei 100 bis 1300 °C vorgenommen. Die TiO₂-Rückstände können pulverförmig vorliegen.

So enthalten die thermisch behandelten (getrockneten) TiO₂-Rückstände als Hauptbestandteil folgende Stoffe (Zahlenangaben in Gew.-%):

| | |
|---|---|
| TiO₂ | 35 bis 70 |
| SiO₂ | 5 bis 40 |
| Eisenverbindungen | 2 bis 15 |
| MgO | 1 bis 15 |
| CaO | 0,5 bis 15 |

Alternativ weisen die thermisch behandelten (getrockneten) TiO₂-Rückstände folgende Hauptbestandteile, gerechnet als Oxide, auf (Zahlenangaben in Gew.-%):

| | |
|---|---|
| TiO₂ | 20 bis 80 |
| SiO₂ | 2 bis 30 |
| Al₂O₃ | 0 bis 15 |
| Fe₂O₃ | 0 bis 15 |
| MgO | 1 bis 15 |
| CaO | 0 bis 15 |

Bei einer bevorzugten Verwendung werden die thermisch behandelten TiO2-Rückstände in einen metallurgischen Ofen, z.B. einen Hochofen oder Elektroschmelzofen oder Kupolofen, eingeblasen. Dies führt zu einer Erhöhung der Haltbarkeit der feuerfesten Ofenausmauerung.

Der Gegenstand der Erfindung wird anhand des folgenden Beispiels näher erläutert:

### Beispiel 1: Aufbereitung eines TiO₂-Rückstandes aus dem Sulfatverfahren für den Einsatz in einem metallurgischen Ofen

100 t Pressfilterabwurf (Aufschlussrückstand), der bei einem Aufschluss bei der TiO₂-Produktion nach Sulfatverfahren anfiel und einen Feststoffgehallt von 75 Gew.-% mit einem TiO₂-Anteit von 53 Gew.-% (bezogen auf den Feststoffgehalt) aufwies, wurde in einem Drehrohrofen bei einer Eintrittstemperatur von 650° C behandelt. Das erhaltene feinteilige Produkt hatte eine Restfeuchte von 0,5 Gew.-%. Das Produkt wies eine sehr gute Rieselfähigkeit auf und ließ sich sehr gut mittels pneumatischer Förderung in einen metallurgischen Ofen (hier ein Hochofen) einblasen.

Das Produkt hatte folgende Zusammensetzung (in Gew.-%):

| | |
|---|---|
| TiO₂ | 53 |
| Fe₂O₃ | 5,9 |
| SiO₂ | 27,8 |
| Al₂O₃ | 6,1 |
| MgO | 2,4 |
| CaO | 4,2 |

## Patentansprüche

1. Verwendung von TiO₂-Rückständen aus dem Sulfatverfahren zur Erhöhung der Haltbarkeit der feuerfesten Ofenausmauerung, **dadurch gekennzeichnet, dass** die TiO₂ Rückstände für sich genommen ohne weitere Mischung mit anderen Stoffen thermisch behandelt werden und in einem metallurgischen Ofen, ausgewählt aus einem Hochofen, Elektroschmelzofen und Kupolofen, eingesetzt werden, wobei die TiO2-Rückstände folgende Hauptbestandteile, gerechnet als Oxide, aufweisen (Zahlenangaben in Gew.-%):
| | |
|---|---|
| TiO₂ | 20 bis 80 |
| SiO₂ | 2 bis 30 |
| Al₂O₃ | 0 bis 15 |
| Fe₂O₃ | 0 bis 15 |
| MgO | 1 bis 15 |
| CaO | 0 bis 15. |

2. Verwendung von TiO2-Rückständen aus dem Sulfatverfahren zur Erhöhung der Haltbarkeit der feuerfesten Ofenausmauerung, **dadurch gekennzeichnet, dass** die TiO₂ Rückstände für sich genommen ohne weitere Mischung mit anderen Stoffen thermisch behandelt werden und in einem metallurgischen Ofen, ausgewählt aus einem Hochofen, Elektroschmelzofen und Kupolofen, eingesetzt werden, wobei die TiO2-Rückstände als Hauptbestandteil folgende Stoffe enthalten (Zahlenangaben in Gew.-%):
| | |
|---|---|
| TiO₂ | 35 bis 70 |
| SiO₂ | 5 bis 40 |
| Eisenverbindungen | 2 bis 15 |
| MgO | 1 bis 15 |
| CaO | 0,5 bis 15. |

3. Verwendung nach Anspruch 1 oder 2, **dadurch gekennzeichnet, dass** die Ti02-Rückstände bei 100 bis 1300°C thermisch behandelt werden.

4. Verwendung nach Anspruch 1, 2 oder 3, **dadurch gekennzeichnet, dass** die TiO2-Rückstände pulverförmig vorliegen.

5. Verwendung nach einem der Ansprüche 1 bis 4, **dadurch gekennzeichnet, dass** die getrockneten TiO2-Rückstände in einen metallurgischen Ofen eingeblasen werden.

## Claims

1. Use of TiO₂ residues from the sulfate process for increasing the durability of the refractory furnace lining, **characterised in that** the TiO₂ residues alone without being mixed further with other substances are heat-treated and used in a metallurgical furnace, selected from a blast furnace, electrosmelting furnace and cupola furnace, whereby the TiO₂ residues comprise the following main constituents, calculated as oxides (amounts are in wt.%):
| | |
|---|---|
| TiO₂ | 20 to 80 |
| SiO₂ | 2 to 30 |
| Al₂O₃ | 0 to 15 |
| Fe₂O₃ | 0 to 15 |
| MgO | 1 to 15 |
| CaO | 0 to 15 |

2. Use of TiO₂ residues from the sulfate process for increasing the durability of the refractory furnace lining, **characterised in that** the TiO₂ residues alone without being mixed further with other substances are heat-treated and used in a metallurgical furnace, selected from a blast furnace, electrosmelting furnace and cupola furnace, whereby the TiO₂ residues comprise the following main constituents (amounts are in wt.%):
| | |
|---|---|
| TiO₂ | 35 to 70 |
| SiO₂ | 5 to 40 |
| Iron compounds | 2 to 15 |
| MgO | 1 to 15 |
| CaO | 0.5 to 15. |

3. Use according to claim 1 or 2, **characterised in that** the TiO₂ residues are heat-treated from 100 to 1300°C.

4. Use according to claim 1, 2 or 3, **characterised in that** the TiO₂ residues are in powder form.

5. Use according to anyone of claims 1 to 4, **characterised in that** the dried TiO₂ residues are injected into a metallurgical furnace.

## Revendications

1. Utilisation de résidus de TiO₂ provenant d'un procédé au sulfate pour augmenter la stabilité du garnissage réfractaire de four, **caractérisée en ce que** les résidus de TiO₂ pris isolément sont traités thermiquement sans autre mélange avec d'autres substances et utilisés dans un four métallurgique sélectionné parmi un haut-fourneau, un four de fusion électrique et un four à cubilot, où les résidus de TiO₂ présentent les ingrédients principaux suivants, calculés en tant qu'oxydes (indications de quantité en pourcentage en poids, %)
| | |
|---|---|
| TiO₂ | 20 à 80 |
| SiO₂ | 2 à 30 |
| Al₂O₃ | 0 à 15 |
| Fe₂O₃ | 0 à 15 |
| MgO | 1 à 15 |
| CaO | 0 à 15. |

2. Utilisation de résidus de TiO₂ provenant d'un procédé au sulfate pour augmenter la stabilité du garnissage réfractaire de four, **caractérisée en ce que** les résidus de TiO₂ pris isolément sont traités thermiquement sans autre mélange avec d'autres substances et utilisés dans un four métallurgique sélectionné parmi un haut-fourneau, un four de fusion électrique et un four à cubilot, où les résidus de TiO₂ contiennent en tant qu'ingrédients principaux les éléments suivants (indications de quantité en pourcentage en poids, %)
| | |
|---|---|
| TiO₂ | 35 à 70 |
| SiO₂ | 5 à 40 |
| Combinaisons de fer | 2 à 15 |
| MgO | 1 à 15 |
| CaO | 0,5 à 15. |

3. Utilisation selon la revendication 1 ou 2, **caractérisée en ce que** les résidus de TiO₂ subissent un traitement thermique à une température de 100 à 1300°C.

4. Utilisation selon la revendication 1, 2 ou 3, **caractérisée en ce que** les résidus de TiO₂ se présentent sous une forme pulvérulente.

5. Utilisation selon l'une des revendications 1 à 4, **caractérisée en ce que** les résidus de TiO₂ séchés sont injectés dans un four métallurgique.
